# EUROPÄISCHE PATENTANMELDUNG

(11) **EP 1 588 941 A2**
(43) Veröffentlichungstag der Anmeldung: **26.10.2005**
(21) Anmeldenummer: 05008701.4
(22) Anmeldetag: 21.04.2005
(51) Int. Cl.: B64D 25/14, B64C 1/14, B64D 25/00

(54) **Vorrichtung zur Beheizung von Verriegelungselementen in Flugzeugen**

(30) Priorität: 24.04.2004 DE 102004020662
(71) Anmelder: ESW-EXTEL SYSTEMS WEDEL Gesellschaft für Ausrüstung mbH, 22880 Wedel (DE); Airbus Deutschland GmbH, 21129 Hamburg (DE)
(72) Erfinder: Jopp, Ulf-Werner, 25335 Elmshorn (DE); Meisiek, Jürgen, 25587 Münsterdorf (DE)
(74) Vertreter: Freitag, Joachim

(57) **Zusammenfassung**

Die Erfindung betrifft eine Vorrichtung zur Beheizung von Verriegelungselementen in Flugzeugen, insbesondere zur Verhinderung der Vereisung von Tür- und Notrutschenverriegelungen.

Die Aufgabe, eine neue Möglichkeit zur Beheizung von Verriegelungselementen in Flugzeugen, insbesondere zur Verhinderung der Vereisung von Tür- und Notrutschenverriegelungen zu finden, die eine Vereisung der Verriegelungselemente zuverlässig beseitigt, ohne dass wegen der hohen mechanischen, chemischen und thermischen Belastungen häufige Wartungs- und Reparaturaufwände erforderlich werden, wird erfindungsgemäß gelöst, indem ein im Boden des Flugzeuges montierter Grundkörper, der ein Einschubprofil (21) enthält, eine integriert eingesetzte Gleitplatte (3) aufweist und dass die Gleitplatte (3) zur Aufnahme einer Heizfolie (4) von unten großflächig ausgehöhlt ist, wobei die Heizfolie (4) in einem Sandwich-Aufbau (41) in die ausgehöhlte Ausnehmung (32) eingebettet ist und die Gleitplatte (3) von unten hermetisch verschlossen ist.

## Beschreibung

Die Erfindung betrifft eine Vorrichtung zur Beheizung von Verriegelungselementen in Flugzeugen, insbesondere zur Verhinderung der Vereisung von Tür- und Notrutschenverriegelungen.

Die Verriegelung von Notausstiegen, insbesondere solche mit aufblasbaren Notrutschen, unterliegen besonderen Anforderungen, um die Sicherheit der Passagiere bei der Landung und in Havariesituationen zu gewährleisten.
Einerseits ist wegen der nach außen freizuhaltenden Räume für Notrutschen keine Wärmedämmung am Flugdeckboden im unteren Türbereich möglich, so dass die Verriegelungselemente beim Flug in mehreren tausend Metern Höhe die Außentemperatur annehmen, ohne Heizung vereisen und somit festfrieren würden. Im Verlauf jedes Fluges sind die Verriegelungen außerdem extremen Temperaturwechseln (von bis zu 100 Kelvin) ausgesetzt.
Andererseits befinden sich die Verriegelungselemente zur Aufnahme der Türriegel direkt im Laufbereich des Ausstiegs, so dass sie nur minimale Bauhöhe haben dürfen sowie großen mechanischen und chemischen Belastungen (z.B. chemischen Reinigungs- und Enteisungsmitteln) ausgesetzt sind.

Im Stand der Technik sind derzeit an den Verriegelungselementen von Ausstiegen mit Notrutschen vor allem Heißluftgebläse im Einsatz, da an den Verriegelungselementen regelmäßig unterhalb des Flugzeugdecks im Tür-/Notrutschenbereich kein Platz für Wärmedämmung und Warmluftzuführungen oder Direktheizer vorhanden ist.
Aufgrund einer nahezu direkten Verbindung der Türverriegelungen zur Außenhaut des Flugzeuges muss der Luftstrom des Heißluftgebläses jedoch eine erhebliche Temperatur und Geschwindigkeit aufweisen, damit er eine Vereisung der Türverriegelung sicher verhindern kann. Luftströme mit Temperaturen von über 45°C und hoher Strömungsgeschwindigkeit sind jedoch bei Hautkontakt erheblich unangenehm und führen bei Dauerbetrieb zu unerwünschter Raumluftaufheizung und Lufttrocknung. Um diese Nebeneffekte zu minimieren und trotzdem in Abhängigkeit von der Außentemperatur die Vereisung sicher zu unterbinden, müssten die Heißluftgebläse sensorgesteuert werden, wobei der Sensor nur bei Direktkontakt mit dem Verriegelungselement optimal arbeiten kann. Außerdem sind Heißluftgebläse mit thermischer Wechsellast relativ störanfällig und bei weitem nicht so effektiv wie eine Direktbeheizung der Verriegelungselemente durch Wärmeleitung und Wärmestrahlung.
Keramische Flächenheizer als Direktheizung sind bisher jedoch an einem teilweise nicht definierbaren thermomechanischen und chemischen Anforderungsprofil während des Flugbetriebes durch nicht akzeptable Ausfallraten (insbesondere durch Rissbildung infolge mechanischer und thermischer Wechselbelastung im Zusammenspiel mit chemischen Einflüssen) gescheitert.

Der Erfindung liegt die Aufgabe zugrunde, eine neue Möglichkeit zur Beheizung von Verriegelungselementen in Flugzeugen, insbesondere zur Verhinderung der Vereisung von Tür- und Notrutschenverriegelungen zu finden, die eine Vereisung der Verriegelungselemente zuverlässig beseitigt, ohne dass wegen der hohen mechanischen, chemischen und thermischen Belastungen häufige Wartungs- und Reparaturaufwände erforderlich werden.

Erfindungsgemäß wird die Aufgabe bei einer Vorrichtung zur Beheizung von Verriegelungselementen in Flugzeugen, insbesondere für Tür- und Notrutschenverriegelungen, bei denen ineinandergreifende Verriegelungselemente, vorzugsweise ein Körper mit einem Einschubprofil und ein in das Einschubprofil eingeschobener Verriegelungsschlitten, vorhanden sind, die während des Flugbetriebes vereisen können, dadurch gelöst, dass ein im Boden des Flugzeuges montierter Grundkörper, der das Einschubprofil enthält, eine integriert eingesetzte Gleitplatte aufweist und dass die Gleitplatte zur Aufnahme einer Heizfolie von unten großflächig ausgehöhlt ist, wobei die Heizfolie in einem Sandwich-Aufbau in die ausgehöhlte Ausnehmung eingebettet ist und die Gleitplatte von unten hermetisch verschlossen ist.

Vorteilhaft besteht der Sandwich-Aufbau aus zwei hochtemperaturbeständigen Gewebematten und der dazwischen angeordneten Heizfolie.
Um den Sandwich-Aufbau der Heizfolie aufzunehmen, ist die Ausnehmung in die Gleitplatte zweckmäßig so eingebracht, dass nur ein der Form der Gleitplatte entsprechender umlaufender, stabiler Rand stehen bleibt. Vorzugsweise ist die Ausnehmung zur Aufnahme des Sandwich-Aufbaus aus der Gleitplatte ausgefräst.

Die Ausnehmung der Gleitplatte mit dem Sandwich-Aufbau aus Heizfolie und Gewebematten ist zweckmäßig mit Flüssigkeramik ausgegossen, um sie auszufüllen und einen guten thermischen Übergang von der Heizfolie zur Gleitplatte zu erreichen.
Weiterhin ist es von Vorteil, wenn die Gleitplatte als unteren Abschluss ein vollflächiges Abdeckblech aufweist, das umlaufend verschweißt ist, um einen stabilen und hermetischen Verschluss zu erreichen. Zur Herausführung von Anschlussdrähten der Heizfolie aus der Gleitplatte weist das Abdeckblech zweckmäßig eine Hülse auf, die in das Abdeckblech eingeschweißt ist.
Es erweist sich weiterhin als vorteilhaft, dass die Gleitplatte über die Hülse an der Unterseite des Grundkörpers mittels einer Konusmutter abdichtend verschraubt wird.

Die Heizfolie ist zweckmäßig eine Metallwiderstandsfolie. Sie ist vorzugsweise eine Aluminium-Chrom-Folie und weist vorteilhaft eine Mäanderstruktur auf, die sich vollflächig innerhalb der Ausnehmung der Gleitplatte befindet.

Zur Temperaturregelung wird zweckmäßig am Grundkörper mindestens ein Sensor zur Regelung des Heizstromes mittels einer Steuereinheit angebracht.
Weiterhin ist es vorteilhaft, am Grundkörper mindestens einen Schutzschalter gegen Überhitzung des Grundkörpers und der Heizfolie anzubringen. Dabei ist der Schutzschalter vorzugsweise ein Bimetallschalter.

Mit der erfindungsgemäßen Lösung ist es möglich, Verriegelungselemente in Flugzeugen, insbesondere von Tür- und Notrutschenverriegelungen, so zu beheizen, dass eine Vereisung der Verriegelungselemente zuverlässig beseitigt wird, ohne wegen der hohen mechanischen, chemischen und thermischen Belastung der Verriegelungselemente häufige Wartungs- und Reparaturaufwände in Kauf nehmen zu müssen.

Die Erfindung soll nachstehend anhand eines Ausführungsbeispieles näher erläutert werden. Die Zeichnungen zeigen:
- Fig. 1:: eine Prinzipansicht der erfindungsgemäßen Vorrichtung in einer Draufsicht und einer Seitenansicht,
- Fig. 2:: eine Innenansicht des Türbereichs,
- Fig. 3:: eine Schnittdarstellung entlang der Linie A-A von Fig. 1,
- Fig. 4:: eine Einzelansicht der Gleitplatte als Schnittdarstellung in invertierter Lage zur Einbringung der Heizfolie und Isolationsschichten,
- Fig. 5:: eine Ausführungsform der Gleitplatte mit Alu-Chrom-Heizfolie bei vollflächiger Ausnutzung der Gleitplatte.

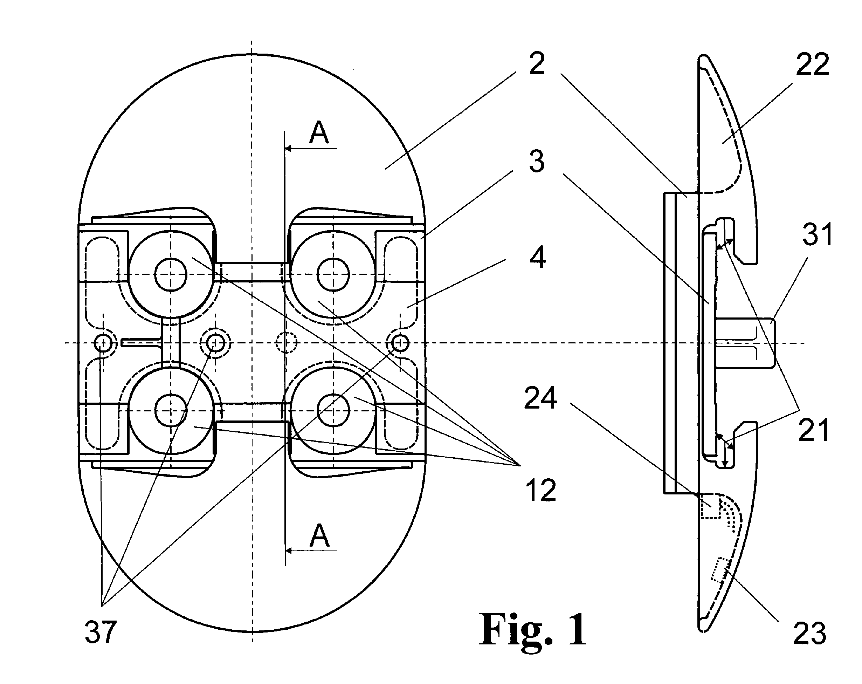

Die erfindungsgemäße Vorrichtung besteht in ihrem Grundaufbau - wie aus Fig. 1, 2 und 3 in Zusammenschau zu entnehmen - aus einem im Fußboden 11 des Flugzeugrumpfes 1 aufsitzend eingelassenen Grundkörper 2, der durch vier Befestigungsschrauben 12 im Fußboden 11 verankert ist und ein Einschubprofil 21 für einen Verriegelungsschlitten 13 aufweist, der im Verriegelungszustand zusammen mit dem Einschubprofil 21 des Grundkörpers 2 einer Schwalbenschwanzführung ähnelt. Der Verriegelungsschlitten 13 wird auf einer Führungsschiene 14, die an der Flugzeugtür 15 angebracht ist, durch einen Hebelmechanismus 16 linear verschoben.
An der Basis des Einschubprofils 21 des Grundkörpers 2 ist eine Gleitplatte 3 mit Anschlagzapfen 31, eine so genannte Anschlag-Stop-Platte, für den eingeschobenen Verriegelungsschlitten 13 vorhanden, die im Grundkörper 2 eingebettet ist. Das Einschubprofil 21 ist somit als Freiraum für den Verriegelungsschlitten 13 nach oben teilweise und seitlich vollständig durch den Grundkörper 2 sowie an der Basisfläche durch die Gleitplatte 3 vorgegeben.
Zur Beheizung der Gleitplatte 3 ist eine Heizfolie 4 vorgesehen, die unterhalb der Gleitfläche in der Gleitplatte 3 selbst untergebracht ist, und die - da ausschließlich die Gleitplatte 3 zur Unterbringung genutzt werden soll - eine Bauhöhe von ca. 1,5 mm aufweist, wobei die Gleitplatte 3 eine Höhe von ca. 2 mm nicht überschreitet.

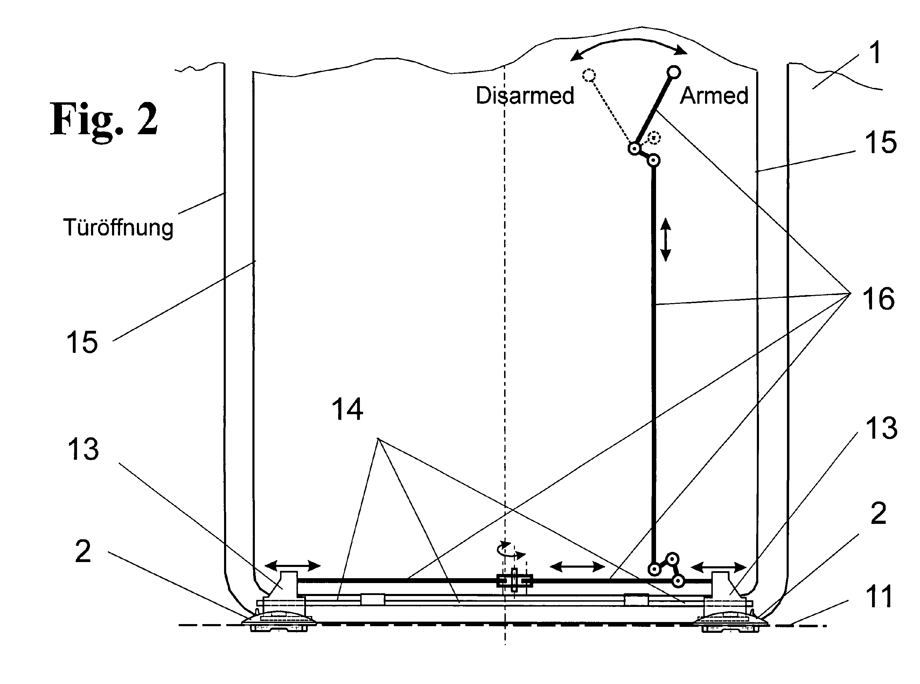

Die Grundfunktion des Verriegelungselements für Flugzeugtüren mit Notrutschen ist in Fig. 2 schematisch dargestellt.

Bei Handbetätigung des Hebelmechanismus 16 in die Hebelstellung "armed" ("scharf") werden an der Flugzeugtür 15 zwei Verriegelungsschlitten 13 entgegengesetzt zueinander aus den Einschubprofilen 21 der beiden Grundkörper 2 herausgezogen und die Notrutschen sind zur Aktivierung freigegeben.
Bei Bewegung des Hebelmechanismus 16 in die Hebelstellung "disarmed" ("entschärft") werden die Verriegelungsschlitten 13 wieder in das Einschubprofil 21 des Grundkörpers 2 eingeschoben und somit der Verriegelungszustand hergestellt.

Wegen der fehlenden thermischen Isolierung unterhalb des Fußbodens 11 im Bereich der Flugzeugtür 15 nehmen die Verriegelungselemente, insbesondere der Grundkörper 2 mit der Gleitplatte 3 und der eingeschobene Verriegelungsschlitten 13, während des Fluges annähernd Außentemperaturen an. Durch niedergeschlagenes Kondenswasser auf den oben genannten Verriegelungselementen frieren diese aneinander fest und müssen durch Erwärmung rechtzeitig vor der Benutzung enteist werden.
Zu diesem Zweck wird im Grundkörper 2 eine elektrische Heizung untergebracht, die aus Platzmangel sowie zur Steigerung der Wirksamkeit in der Gleitplatte 3 integriert ist.

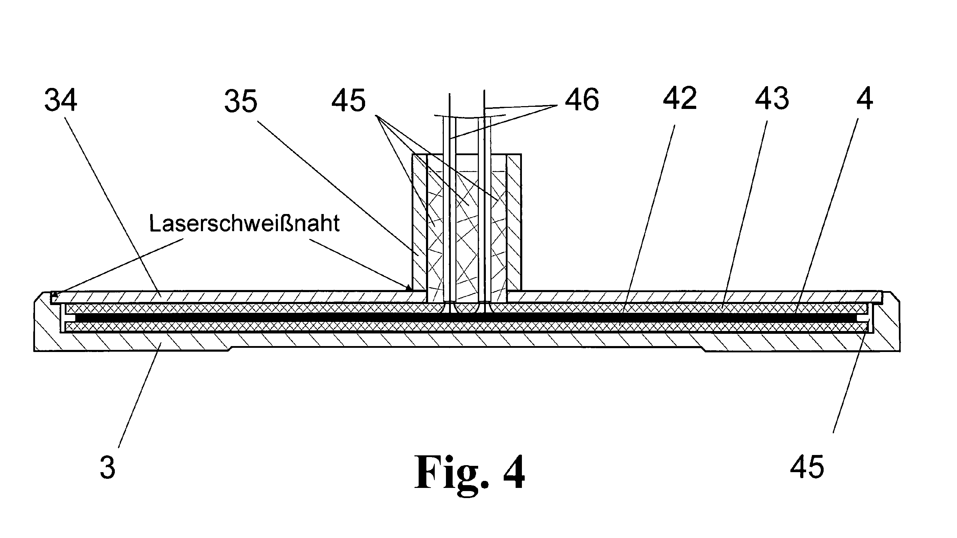

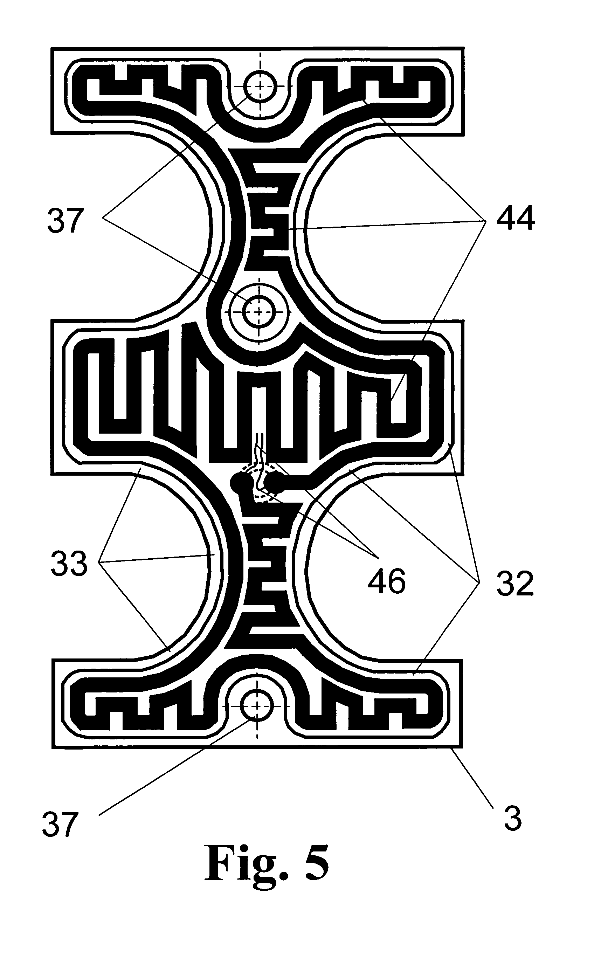

Zur Herstellung der beheizten Gleitplatte 3 wird diese von der Unterseite hohl ausgefräst und die entstehende Ausnehmung 32, wie in Fig. 4 dargestellt, als Form zum Einbetten einer Heizfolie 4 in einem Sandwich-Aufbau 41, verwendet. Die Gleitplatte 3 weist nach dem Einbringen der Ausnehmung 32 einen vollständig umlaufenden, stabilen Rand 33 auf, wie aus Fig. 5 zu ersehen.

Fig. 4 zeigt die umgewendete ausgefräste Gleitplatte 3 mit der Ausnehmung 32 nach oben. In diese Ausnehmung 32 wird für den Sandwich-Aufbau 41 der Heizfolie 4 zunächst eine erste Glas- oder Keramik-Gewebeschicht 42 eingelegt, auf die die Heizfolie 4, vorzugsweise eine geätzte Alu-Chrom-Folie in Form einer Mäanderstruktur 44 - wie beispielhaft in Fig. 5 dargestellt, aufgelegt wird.
Die Heizfolie 4 wird mit einer zweiten Glas- oder Keramik-Gewebeschicht 43 isolierend abgedeckt und der Sandwich-Aufbau 41 mit aushärtbarer Flüssigkeramik 45 getränkt.

Als Abschluss wird die Gleitplatte 3 mit einem Abdeckblech 34, das mit einer Hülse 35 zur Durchführung der Anschlussdrähte 46 der Heizfolie 4 verschweißt ist, durch eine umlaufende Laserverschweißung fest verbunden.

Die so ausgelegte Gleitplatte 3 wird abschließend vollständig mit Flüssigkeramik 45 ausgefüllt, die - zur Verhinderung von Lufteinschlüssen - unter Vakuum eingefüllt und ausgehärtet wird. Durch die Flüssigkeramik 45 werden automatisch auch die Gewebeschichten 42 und 43 durchtränkt und bewirken nach Aushärtung eine zuverlässige Fixierung, eine mechanisch hochstrapazierfähige sowie elektrisch hochwirksame Isolierung der Heizfolie 4.

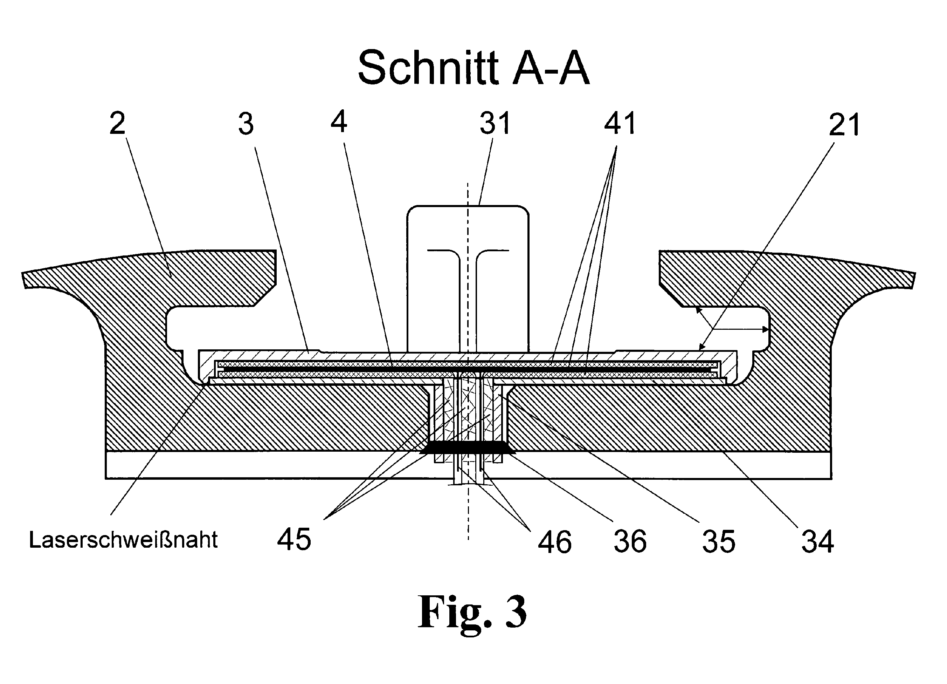

Gemäß Fig. 3 wird die Gleitplatte 3 über die Hülse 35 mittels einer Konusmutter 36 an der Unterseite des Grundkörpers 2 fixiert. Weiterhin werden Arretierungsschrauben 37 von oben durch die Gleitplatte 3 in den Grundkörper 2 geschraubt, wie man in Fig. 1 erkennen kann.

Durch die umlaufende Laserverschweißung und den Keramikverguss ist die Gleitplatte 3 hermetisch gegen chemische Umwelteinflüsse abgedichtet. Die Heizfolie 4 ist vollständig eingeschlossen und außerdem dank des Sandwich-Aufbaus 41 bei begrenzt überhöhter Krafteinwirkung nicht zerbrechlich. Die Temperaturstabilität der Heizfolie 4 allein beträgt je nach Materialauswahl 550 bis über 1000°C.
Bei komplizierter Form (vergleiche Fig. 5) und geringer Bauhöhe (bis zu 1,5 mm) vereint die Gleitplatte 3 die eigentliche Gleit- und Anschlagstopp-Funktion mit der Funktion eines thermisch und mechanisch hochleistungsfähigen Heizelements, wobei die mechanische Funktionsfähigkeit der Gleitplatte 3 bei niedrigen Umgebungstemperaturen (unter 0°C) durch Beheizung mit einer Wärmeleistung von ca. 120 W und Temperaturen bis zu 270°C gewährleistet wird.

Die Heizleistung wird durch die Heizfolie 4 üblicherweise nicht permanent erbracht, sondern es wird ein Auftauen der Vereisung binnen 20 min bei Temperaturen von - 40°C (Temperatur des Verriegelungselements ≈ Außentemperatur) gefordert.
Zu diesem Zweck ist in einem Hohlraum 22 des Grundkörpers 2 (siehe Fig. 1) ein Sensor 23 befestigt, der nach Einschaltung der Stromzufuhr zur Heizfolie 32 die Heizleistung über eine Steuereinheit (nicht dargestellt) regelt. Zusätzlich kann zur Verhinderung einer Überhitzung ein Schutzschalter 24 ebenfalls im Hohlraum 22 untergebracht sein, der - als Bimetallschalter ausgelegt - beim Überschreiten einer oberen Grenztemperatur die Heizstromzufuhr zur Heizfolie 4 unterbricht oder bei Ausfall der Heizstromregelung einen gefahrlosen Notbetrieb gewährleistet.
Damit werden die Betriebszeiten und die Heizleistung geeignet begrenzt, woraus ebenfalls eine erhöhte Lebensdauer der beheizten Gleitplatte 3 innerhalb des Grundkörpers 2 des Verriegelungselements resultiert.

Außerdem ist die Gleitplatte 3 mit der integrierten Heizfolie 4 als separates Bauteil relativ einfach zu ersetzten, falls die Heizfunktion doch einmal ausgefallen sein sollte. In diesem Fall ist - wie man anhand der Fig. 1 und 3 ersehen kann - ein Austausch der kompletten Gleitplatte 3 möglich, indem drei Arretierungsschrauben 37 im Grundkörper 2, die Konusmutter 36, die von unten am Grundkörper 2 auf die Hülse 35 des Abdeckbleches 34 aufgeschraubt ist, gelöst werden sowie ein Steckverbinder (nicht dargestellt) für die Anschlussdrähte 46 der Heizfolie 4 abgezogen wird.

### Bezugszeichenliste

- 1: Flugzeugrumpf
- 11: Fußboden
- 12: Befestigungsschrauben
- 13: Verriegelungsschlitten
- 14: Führungsschiene
- 15: Flugzeugtür
- 16: Hebelmechanik

- 2: Grundkörper
- 21: Einschubprofil
- 22: Hohlraum
- 23: Sensor
- 24: Schutzschalter

- 3: Gleitplatte
- 31: Anschlagzapfen
- 32: Ausnehmung
- 33: Rand
- 34: Abdeckblech
- 35: Hülse
- 36: Konusmutter
- 37: Arretierungsschrauben

- 4: Heizfolie
- 41: Sandwich-Aufbau
- 44: Mäanderstruktur
- 42: erste Gewebematte
- 43: zweite Gewebematte
- 45: Flüssigkeramik
- 46: Anschlussdrähte

## Patentansprüche

1. Vorrichtung zur Beheizung von Verriegelungselementen in Flugzeugen, insbesondere für Tür- und Notrutschenverriegelungen, bei denen ineinandergreifende Verriegelungselemente, vorzugsweise ein Körper mit einem Einschubprofil und in das Einschubprofil eingeschobener Verriegelungsschlitten, vorhanden sind, die während des Flugbetriebes vereisen können, **dadurch gekennzeichnet, dass**
- ein im Boden (11) des Flugzeugs montierter Grundkörper (2), der das Einschubprofil (21) enthält, eine integriert eingesetzte Gleitplatte (3) aufweist,
- die Gleitplatte (3) von unten zur Aufnahme einer Heizfolie (4) großflächig ausgehöhlt ist, wobei
- die Heizfolie (4) in einem Sandwich-Aufbau (41) in die ausgehöhlte Ausnehmung (32) eingebettet ist und
- die Gleitplatte (3) von unten hermetisch verschlossen ist.

2. Vorrichtung nach Anspruch 1, **dadurch gekennzeichnet, dass**
der Sandwich-Aufbau (41) aus zwei hochtemperaturbeständigen Gewebematten (42, 43) und der dazwischen angeordneten Heizfolie (4) besteht.

3. Vorrichtung nach Anspruch 2, **dadurch gekennzeichnet, dass**
die Ausnehmung (32) in der Gleitplatte (3) so eingebracht ist, dass nur ein der Form der Gleitplatte (3) entsprechender stabiler umlaufender Rand (33) stehen bleibt.

4. Vorrichtung nach Anspruch 1, **dadurch gekennzeichnet, dass**
die Ausnehmung (32) der Gleitplatte (3) mit dem Sandwich-Aufbau (41) aus Heizfolie (4) und Gewebematten (42, 43) mit Flüssigkeramik (45) ausgegossen ist, um die Gleitplatte (3) auszufüllen und eine hohe thermische Anbindung der Heizfolie (4) an die Gleitplatte (3) zu erreichen.

5. Vorrichtung nach Anspruch 1, **dadurch gekennzeichnet, dass**
die Gleitplatte (3) als unteren Abschluss ein vollflächiges Abdeckblech (34) aufweist, das umlaufend verschweißt ist, um eine stabilen und hermetischen Abschluss zu erreichen.

6. Vorrichtung nach Anspruch 5, **dadurch gekennzeichnet, dass**
die Gleitplatte (3) zur Durchführung von Anschlussdrähten (46) der Heizfolie (4) eine Hülse (35) aufweist, die in das Abdeckblech (34) eingeschweißt ist.

7. Vorrichtung nach Anspruch 6, **dadurch gekennzeichnet, dass**
die Gleitplatte (3) über die Hülse (35) an der Unterseite des Grundkörpers (2) mittels einer Konusmutter (36) abdichtend verschraubt ist

8. Vorrichtung nach Anspruch 1, **dadurch gekennzeichnet, dass**
die Heizfolie (4) eine Metallwiderstandsfolie ist.

9. Vorrichtung nach Anspruch 8, **dadurch gekennzeichnet, dass**
die Heizfolie (4) eine Aluminium-Chrom-Folie ist.

10. Vorrichtung nach Anspruch 1, **dadurch gekennzeichnet, dass**
die Heizfolie (4) eine Mäanderstruktur (44) aufweist, die sich vollflächig innerhalb der Ausnehmung (32) der Gleitplatte (3) befindet.

11. Vorrichtung nach Anspruch 1, **dadurch gekennzeichnet, dass**
zur Temperaturregelung in einem Hohlraum (22) des Grundkörpers (2) mindestens ein Sensor (23) zur Regelung des durch die Heizfolie (32) fließenden Heizstromes mittels einer Steuereinheit angebracht ist.

12. Vorrichtung nach Anspruch 1, **dadurch gekennzeichnet, dass**
in einem Hohlraum (22) des Grundkörpers (2) mindestens ein Schutzschalter (24), vorzugsweise ein Bimetallschalter gegen Überhitzung des Grundkörpers (2) und der Heizfolie (32) angebracht ist.
